# EUROPÄISCHE PATENTSCHRIFT

(11) **EP 0 557 493 B1**
(45) Veröffentlichungstag und Bekanntmachung des Hinweises auf die Patenterteilung: **27.03.1996**
(21) Anmeldenummer: 92919356.3
(22) Anmeldetag: 14.09.1992
(51) Int. Cl.: B23D 35/00, B26D 1/46

(54) **VORRICHTUNG ZUM ABLÄNGEN VON KONTINUIERLICH ZUGEFÜHRTEM STREIFENMATERIAL**
DEVICE FOR CUTTING A CONTINUOUSLY FED STRIP OF MATERIAL INTO LENGTHS
DISPOSITIF POUR LE DECOUPAGE DE MATIERE EN BANDE AMENEE EN CONTINU

(30) Priorität: 16.09.1991 DE 4131107
(43) Veröffentlichungstag der Anmeldung: 01.09.1993
(73) Patentinhaber: Mars GmbH, D-41751 Viersen (DE)
(72) Erfinder: MÖHLENBROCK, Peter, D-4060 Viersen 11 (DE); TAPFER, Uwe, Burr Ridge, IL 60521 (US); LAUBACHER, Marcel, D-4060 Viersen 11 (DE)
(74) Vertreter: Goddar, Heinz J., Dr.
(86) Internationale Anmeldenummer: DE9200802
(87) Internationale Veröffentlichungsnummer: WO9305914

(56) Entgegenhaltungen:
- DE-A- 2 306 356
- DE-A- 3 338 282
- DE-C- 885 990
- GB-A- 2 167 331

## Beschreibung

Die Erfindung betrifft eine Vorrichtung zum Ablängen von sprödem Streifenmaterial, beispielsweise Gebackstreifen oder dergleichen, gemäß dem Oberbegriff von Patentanspruch 1.

Aus der GB-A 2 167 331 ist eine Vorrichtung zum Ablängen von Streifen- oder Bandmaterial bekannt, wobei das Bandmaterial der Vorrichtung zugeführt wird, welche ein taktweise anhebbares und absenkbares Endlos-Schneidband aufweist, welches nach Art einer Säge das darunter befindliche Material in Stück gewünschter Länge abteilt. Diese Vorrichtung ist zum Ablängen von sprödem Streifenmaterial, wie mit einem Überzug versehenen Keksstreifen, nicht geeignet, da einerseits die sehr leichten Keksstreifen aufwendig gehalten werden müssen, damit sie von dem Endlosband nicht einfach verschoben, sondern tatsächlich geschnitten werden, andererseits neigt das Endlosband bei den stark anhaftenden Massen, die für die Kekse verwendet werden, zur schnellen Verschmutzung, so daß keine sauberen Schnitte durchgeführt werden können.

Daher wurde für solche Keks- oder Gebäckstreifen bereits eine Vorrichtung zum Ablängen des Materials verwendet, die ein Messer aufweist, das quer zur Transportrichtung des Streifenmaterials angeordnet ist und einen Schneidbereich definiert, wobei das Messer taktweise anzuheben und abzusenken war.

Mit derartigen Vorrichtungen wird Streifenmaterial auf Stücke vorbestimmter Länge zugeschnitten, indem das Streifenmaterial, wobei es sich im allgemeinen um eine Vielzahl parallelliegender Streifen handelt, der Vorrichtung zugeführt, im Bereich der Schneidkante des unterhalb des Streifenmaterials befindlichen Messers kurzzeitig angehalten und in einer Absenkbewegung eines als Schneideinrichtung dienenden Messers geschnitten wird. In der Nahrungsmittelindustrie werden beispielsweise vorbereitete Gebäckstreifen, die mit einer Cremeschicht oder dergleichen versehen sind, zu Keksriegeln zugeschnitten. Im Laufe der Zeit wird dabei die obere Schneideinrichtung von anhaftendem oder klebendem Material wie beispielsweise zuckerhaltigen Fettcremes oder Schokolade verunreinigt, das von den Gebäckstreifen wahrend des Schneidens abgetragen wird und einen Belag auf der Schneidkante aufbaut. Auch nutzt sich die Klinge des als Schneideinrichtung verwendeten Messers sehr schnell ab, so daß bei dem brüchigen und spröden Keksmaterial keine sauberen Schnitte mehr möglich sind. Daher ist es erforderlich, mindestens alle 30 Minuten das obere Messer auszuwechseln. Während dieser Zeit laufen 1 bis 2 m Gebäckstreifenmaterial ungeschnitten durch die Vorrichtung und sind somit verloren. Andererseits sind ausgebrochene Schneidkanten aber nicht akzeptabel. Es sind nicht nur Qualitätsanforderungen hinsichtlich des Aussehens des fertigen Produktes gestellt, auch das Aufbringen eines Schokoladeüberzuges ist erschwert. Weiterhin ergeben sich später Probleme bei der automatischen Verpackung. Aus allen diesen Gründen werden saubere Schnittkanten bei den Gebäckstreifen als unverzichtbar empfunden, so daß bisher ein gewisser Produktionsausfall in Kauf genommen werden mußte.

Um die Schneidkanten zu reinigen, sind mechanische Abstreifer eingesetzt worden, die sich aber nicht bewährt haben, da abgeschabte Creme- oder Schokoladereste auf das herzustellende Produkt fallen, was wiederum zu erheblichen Qualitätsmängeln führt. Auch sogenannte Ölvorrichtungen, die die Schneidkante mit einem Ölfilm versehen sollen, haben sich nicht bewährt. Zum einen wird der Aufbau der Ablagerungsschicht nicht wesentlich reduziert, zum anderen besteht die Gefahr, daß Öl auf die Gebäckstreifen tropft, was auch das nachträgliche Überziehen der Streifen mit Schokolade erschweren kann.

Es ist die Aufgabe der Erfindung, eine Vorrichtung zum Ablängen bzw. Querschneiden von Streifenmaterial zu schaffen, die auch bei längerem Betrieb saubere Schnitte, selbst bei schmierendem oder sprödem Material,. liefert.

Diese Aufgabe wird von einer Vorrichtung der eingangs genannten Gattung mit den Merkmalen des Kennzeichens von Patentanspruch 1 gelöst. Vorteilhafte Ausgestaltungen sind Gegenstand der Unteransprüche.

Erfindungsgemäß wird zum Erzielen eines sauberen Schnittes also ein Doppelmesser eingesetzt, so daß das Material entlang der höchsten Scherspannung in zwei kleinen Spannungskegeln abbricht, die erheblich kleiner sind als der Spannungs- bzw. Bruchkegel bei den konventionellen Ein-Messer-Vorrichtungen Qualitätseinbußen, die insbesondere im Zusammenhang mit dem Überziehen von Zucker- und Schokolademassen auftreten können, werden vermieden.

Die Vorrichtung umfaßt eine indexierbare Antriebsvorrichtung für das Schneidband, welche das Schneidband immer dann über den Schneidbereich bewegt, wenn es gerade angehoben ist.

Bevorzugt ist das Schneidband oberhalb des zu schneidenden Streifenmaterials vorgesehen.

Die indexierbare Antriebsvorrichtung kann dabei frei programmierbar sein, so daß es möglich ist, beispielsweise alle fünfzehn Minuten das Schneidband so weit zu transportieren, daß sich ein bisher unbenutzter Abschnitt im Schneidbereich befindet. Es kann aber auch bei jedem Hub das Schneidband um einen kleineren Weg weitertransportiert werden, so daß nahezu kontinuierlich ein Austausch des Schneidbandes im Schneidbereich stattfindet.

Vorteilhaft ist das Schneidband außerhalb des Schneidbereiches beidseits von diesem um etwa 45° verdrillt.

Weiter bevorzugt wird das Messer synchron mit der Anheb- und Absenkbewegung des Schneidbandes bewegt, d.h. entsprechend abgesenkt bzw. angehoben, wenn auch vorteilhaft mit einem geringeren Hub als beim Schneidband.

Nach einer besonders bevorzugten Ausführungsform ist die indexierbare Antriebsvorrichtung mit einem Umkehrantrieb oder Reverseantrieb versehen, so daß das Schneidband auch in die entgegengesetzte Richtung über den Schneidbereich geführt werden kann.

Für das Schneidband, dessen Länge in der Größenordnung von 100 m liegt, ist auf beiden Seiten des Schneidbereiches je eine Kassette vorgesehen, in der das dem Schneidbereich zuzuführende oder aus dem Schneidbereich herausgeführte Schneidband lose spiralig gewickelt liegt.

Bevorzugt ist wenigstens an einer der Kassetten eine Reinigungseinrichtung vorgesehen, so daß das Schneidband von Gebäckresten befreit wird, bevor es in die Kassette einläuft.

Nach einer weiteren Ausgestaltung der Erfindung kann auch anstelle des unteren Messers ein Schneidband verwendet werden, das ebenso wie das Schneidband der oberen Schneideinrichtung auszustatten ist.

Es ist weiterhin möglich, als Antrieb für das Schneidband frei programmierbare Servomotoren zu verwenden, wodurch eine Optimierung der Schneiddynamik für jedes Produkt vorgenommen werden kann. Eine zu langsame Bewegung des Schneidbandes könnte zu vemehrtem Bruch führen, während eine zu schnelle Bewegung die Gefahr des Auftretens von Instabilitäten und Schwingungen in der Vorrichtung in sich birgt.

Für manche Anwendungen werden die Schneidergebnisse verbessert, wenn das Schneidband außerhalb des Schneidbereiches gekühlt wird, wozu eine entsprechende Kühleinrichtung vorgesehen sein kann.

Der Schneidbetrieb von kalten oder gefrorenen Gütern wird hingegen durch eine ohmsche Heizung des Schneidbandes erleichtert.

Ebenfalls vorteilhaft kann außerhalb des Schneidbereiches eine Schmiereinrichtung zum Aufbringen eines Öl- oder Wasserfilms auf das Schneidband vorgesehen sein.

Bei der erfindungsgemäßen Vorrichtung zum Ablängen von Streifenmaterial ist die Schnittkante nach einmaliger Verwendung noch nicht unbrauchbar, vielmehr kann das Band mehrere Male verwendet werden. Es hat sich gezeigt, daß ein Austausch eines Schneidbandes einer Länge von 100 m erst nach einer Woche Betriebszeit erfolgen muß. Auch ist das abgenutzte Band in einer Kassette bereits gereinigt, so daß es auf einfachste Weise wiederverwertbar ist.

Ein nahezu unbegrenzter Schneidbetrieb kann aufrechterhalten werden, wenn außerhalb des Schneidbereiches eine Einrichtung zum kontinuierlichen Schärfen des Schneidbandes vorgesehen ist.

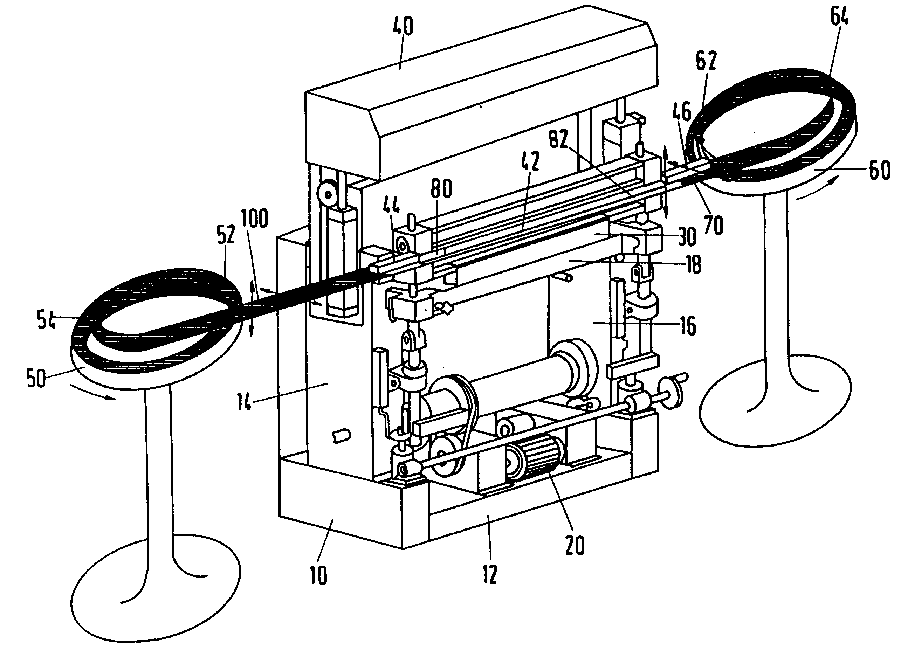

Im folgenden soll die Erfindung lediglich beispielhaft anhand der beigefügten Zeichnung näher erläutert werden. Dabei zeigt die einzige Figur eine schematische Ansicht der erfindungsgemäßen Vorrichtung zum Schneiden von Streifenmaterial.

Die Vorrichtung besteht aus einem Raumengestell 10 mit einer Bodenplatte 12 und zwei jeweils seitlich angebrachten, nach oben ragenden Schenkein 14, 16, deren Abstand so bemessen ist; daß zwischen ihnen ein Transportband für das zu schneidende Streifenmaterial laufen kann. Auf der Bodenplatte 12 des Rahmengestells 10 ist die Hauptantriebsvorrichtung 20 angeordnet, die auf an sich bekannte Weise die für das Schneiden erforderlichen Bewegungsabläufe bewirkt. Auf einer zwischen den Trägern 14, 16 quer verlaufenden Schwelle 18 ist ein Messer 30 feststehend angebracht. In der Höhe ist das Messer 30 so angeordnet, daß die Streifen von dem zuführenden Transportband direkt auf die Schneidkante des Messers 30 gefördert werden. An beiden Seiten des Rahmens 10, benachbart den Trägern 14, 16, ist jeweils eine auf einem Sockel geeigneter Höhe angebrachte Kassette 50, 60 vorgesehen, welche mittels eines Taktantriebes schrittweise rotiert werden können. Die Kassetten 50, 60 dienen als Aufnahmeeinrichtung bzw. Abgabeeinrichtung für ein Schneidband 100. In jede Kassette 50, 60 ist das Schneidband 100 spiralig locker eingelegt und am Ausgang um etwa 45° verdrillt. Durch eine an einer nicht dargestellten Hubvorrichtung vorgesehenen Führung 42, die sich über den Schneidbereich, also nahezu über den gesamten Abstand zwischen den beiden Trägern 14, 16 erstreckt, wird das Schneidband 100 auf definierte Weise geführt. Auf jeder Seite der Führung 42 ist weiterhin eine Höhenhalterung 44, 46 für das Schneidband 100 angebracht, so daß das aus den Kassetten auslaufende bzw. in sie einlaufende Schneidband 100 der Führungsvorrichtung 42 präzise zugeführt wird, auch wenn die Vorrichtung für den Reverse-Betrieb d.h. mit umgekehrter Laufrichtung des Schneidbandes, geschaltet ist.

Die Kassetten 50, 60 sowie der freiliegende Bereich des Schneidbandes 100 können mit einer Abdeckung 40 versehen sein, die in der Zeichnung nur teilweise dargestellt ist, so daß eine Verletzungsgefahr für den Bediener ausgeschlossen ist. Diese Abdeckung kann auch die Kassetten verschließen, wozu sie vorteilhaft in diesem Bereich als Hauben ausgebildet sind.

Unterhalb der Höhenhalterung 46 sind im Bereich der zweiten Kassette 60 als Reinigungseinrichtung, vor und hinter dem Schneidband liegend, Abstreifblöcke 70 vorgesehen, der das Schneidband 100 von Gebäck- und Cremeresten befreit, bevor es in die Kassette 60 einläuft.

Außer dem Taktantrieb für die Kassetten 50, 60 sind für das Schneidband 100 separate Antriebsvorrichtungen 80, 82 jeweils in den Endbereichen des Schneidbereiches vorgesehen. Diese können gegebenenfalls frei programmierbare Servoantriebe sein, damit die Schneidkinematik bedarfsweise und rasch geändert werden können.

Obwohl das Schneidband 100 in den Kassetten 50, 60 nur lose liegt und grundsätzlich in sämtlichen Freiheitsgraden bewegbar ist, wird durch das Zusammenwirken der Antriebsvorrichtungen 80, 82 sowie des Taktantriebes an den Kassetten und den Höhenhalterungen 44, 46 bzw. der Führungsvorrichtung 42 gewährleistet, daß im Schneidbereich die für ein sauberes Schneiden erforderliche relative Positionierung von Schneidband 100 und Messer 30 eingehalten wird.

Zum Installieren des Schneidbandes 100 wird dieses in eine der Kassetten 50 spiralig aufgewickelt gelegt, wobei das Schneidband 100 von dem Zentrum der Spirale her aus der Kassette 50 herausgeführt wird. Um sicherzustellen, daß das in der Kassette verbleibende Schneidband während des Entnehmens nicht unkontrolliert die Kassette verläßt, ist in deren peripheren Bereich eine weitere Höhenhalterung 52 vorgesehen, die etwa in Bereich des Auslasses vorgesehen ist. Umfangsmäßig gegenüber dieser Höhenhalterung 52 befindet sich ein Näherungsschalter 54 für den Taktantrieb, der den Antrieb sofort stoppt, wenn kein Scheidband mehr in der Kassette ist. Um die Vorrichtung auch im Reverse-Betrieb laufen lassen zu können, sind an der Kassette 60 ebenfalls eine Höhenhalterung 62 sowie ein Näherungsschalter 64 für den Taktantrieb vorgesehen.

Das aus der Kassette 50 auszulassende Schneidband 100 wird durch die Höhenhalterung 44 und in die Führung 42 geführt, hinter dem Schneidbereich wieder durch die Höhenhalterung 46 und damit an den Abstreifblöcken 70 entlang. Sodann wird das Schneidband 100 in die zweite Kassette 60 eingeführt. Die Kassetten sowie der Bereich des Schneidbandes zwischen den Kassetten werden schließlich durch eine Abdeckhaube abgedeckt.

Der Taktantrieb für die Kassette 50 sorgt für eine pulsgesteuerte Ausgabe des Schneidbandes 100. Der Taktantrieb für die Kassette 60, der mit dem für die Kassette 50 synchron läuft, nimmt die entsprechende Menge an Schneidband 100, der aus dem Schneidbereich entlassen wird, auf. Die Feinsteuerung der Vorwärtsbewegung des Schneidbandes 100 wird durch die Antriebsvorrichtungen 80,82 bewirkt.

Für jeden Schneidvorgang wird die Hubvorrichtung zusammen mit dem Schneidband 100 angehoben und abgesenkt. Während des Absenkens des Schneidbandes 100, d.h. während des tatsächlichen Schnittes, wird das Schneidband 100 nicht vorgeschoben. Der Vorschub erfolgt nur, wenn das Schneidband 100 angehoben ist.

Je nach dem zu schneidenden Material kann es günstig sein, das Schneidband 100 im Schneidbereich zu lassen, bis die Standzeit des Schneidbandes 100 erreicht ist, bei Gebäckstreifen beispielsweise nach fünfzehn Minuten. Wenn dann das Schneidband 100 einmal vollständig von der Kassette 50 in die Kassette 60 gelaufen ist, ist es unbrauchbar und muß ausgetauscht werden.

Es kann aber auch vorteilhaft sein, das Schneidband bei jedem Hub oder nach einer vorbestimmten Anzahl von Hüben jeweils um einen Bruchteil der Breite des Schneidbereiches vorwärts zu bewegen. Dann kann das Schneidband 100 die Apparatur mehrmals durchlaufen. Das Schneidband muß dazu nicht erneut eingelegt werden, ein Reverse-Antrieb (nicht gezeigt) ermöglicht es , das Schneidband 100 in dem zweiten Durchgang von der Kassette 60 in die Kassette 50 laufen zu lassen. Um die Vorschubsteuerung auf einfache Weise durchführen zu können, kann eine entsprechende programmierbare Steuereinrichtung vorgesehen sein.

## Patentansprüche

1. Vorrichtung zum Ablängen von sprödem Streifenmaterial, beispielsweise Gebäckstreifen oder dergleichen, welches der Vorrichtung zugeführt wird, mit einem taktweise anhebbaren und absenkbaren Schneidband (100), dessen Länge größer ist als ein Schneidbereich und das quer zur Transportrichtung des Streifenmaterials bewegbar ist, dadurch gekennzeichnet, daß das Schneidband (100) mit einem Messer (30) als Gegenmesser zusammenwirkt, das in bezug auf die Transportrichtung des Streifenmaterials in einer dazu senkrecht liegenden Ebene angeordnet ist und den Schneidbereich definiert und daß sie eine indexierbare Antriebsvorrichtung (80, 82) für das Schneidband (100) umfaßt.

2. Vorrichtung nach Anspruch 1, dadurch gekennzeichnet, daß das Schneidband (100) oberhalb des Streifenmaterials vorgesehen ist.

3. Vorrichtung nach einem der Ansprüche 1 oder 2, dadurch gekennzeichnet, daß die indexierbare Antriebsvorrichtung (80, 82) wenigstens für eine änderbare Schrittweite des Vorschubes in z-Richtung für das Schneidband (100) programmierbar ist.

4. Vorrichtung nach einem der Ansprüche 1 bis 3, dadurch gekennzeichnet, daß das Schneidband (100) außerhalb des Schneidbereiches beidseits von diesem um etwa 45° verdrillt ist.

5. Vorrichtung nach einem der Ansprüche 1 bis 4, dadurch gekennzeichnet, daß das Messer (30) synchron mit der Anheb- und Absenkbewegung des Schneidbandes (100) absenkbar und anhebbar ist.

6. Vorrichtung nach einem der Ansprüche 1 bis 5, dadurch gekennzeichnet, daß ein Umkehrantrieb für das Schneidband (100) vorgesehen ist.

7. Vorrichtung nach einem der Ansprüche 1 bis 6, dadurch gekennzeichnet, daß das nicht endlose Schneidband (100) in als Vorratsbehälter dienende Kassetten (50, 60) lose eingelegt ist.

8. Vorrichtung nach einem der Ansprüche 1 bis 7, dadurch gekennzeichnet, daß zwischen dem Schneidbereich und wenigstens einer der Kassetten (50, 60) eine Reinigungseinrichtung (70) für das Schneidband (100) vorgesehen ist.

9. Vorrichtung nach Anspruch 8, dadurch gekennzeichnet, daß die Reinigungseinrichtung (70) aus zwei einander gegenüberliegenden Abstreifblöcken besteht, zwischen denen das Schneidband (100) liegt.

10. Vorrichtung nach einem der vorangehenden Ansprüche, dadurch gekennzeichnet, daß das Messer (30) durch ein Schneidband ersetzt ist.

11. Vorrichtung nach einem der vorangehenden Ansprüche, dadurch gekennzeichnet, daß das Schneidband (100) durch frei programmierbare Servomotoren angetrieben ist.

12. Vorrichtung nach einem der vorangehenden Ansprüche, dadurch gekennzeichnet, daß eine Einrichtung zum Kühlen des Schneidbandes (100) außerhalb des Schneidbereiches vorgesehen ist.

13. Vorrichtung nach einem der vorangehenden Ansprüche, dadurch gekennzeichnet, daß eine Heizung für das Schneidband (100) vorgesehen ist.

14. Vorrichtung nach einem der vorangehenden Ansprüche, dadurch gekennzeichnet, daß eine Schmiereinrichtung zum Aufbringen eines Öl- oder Wasserfilms auf das Schneidband (100) vorgesehen ist.

15. Vorrichtung nach einem der vorangehenden Ansprüche, dadurch gekennzeichnet, daß außerhalb des Schneidbandes eine Einrichtung zum kontinuierlichen Schärfen des Schneidbandes (100) vorgesehen ist.

## Claims

1. A device whereby brittle strip material, e.g. strips of pastry or the like supplied to the device, are cut to length by a cutting band (100) which can be rhythmically raised and lowered and is longer than a cutting region and is movable transversely to the direction in which the strip material is conveyed, characterised in that the cutting band (100) co-operates with an abutting knife (30) which is disposed in a plane at right angles to the direction in which the strip material is conveyed and defines the cutting region, the device also comprising an indexable drive device (80, 82) for the cutting band (100).

2. A device according to claim 1, characterised in that the cutting band (100) is disposed above the strip material.

3. A device according to claim 1 or 2, characterised in that the indexable drive device (80, 82) is programmable at least for varying the step width of forward motion of the cutting band (100) in the z-direction.

4. A device according to any of claims 1 to 3, characterised in that the cutting band (100) outside the cutting region is twisted by about 45° on each side thereof.

5. A device according to any of claims 1 to 4, characterised in that the knife (30) can be lowered and raised in synchronism with the lifting and lowering motion of the cutting band (100).

6. A device according to any of claims 1 to 5, characterised in that a reversing drive is provided for the cutting band (100).

7. A device according to any of claims 1 to 6, characterised in that the non-endless cutting band (100) is loosely inserted into storage containers in the form of cassettes (50, 60).

8. A device according to any of claims 1 to 7, characterised in that a device (70) for cleaning the cutting band (100) is provided between the cutting region and at least one of the cassettes (50, 60).

9. A device according to claim 8, characterised in that the cleaning device (70) comprises two stripping blocks opposite one another and between which the cutting band (100) lies.

10. A device according to any of the preceding claims, characterised in that the knife (30) is replaced by a cutting band.

11. A device according to any of the preceding claims, characterised in that the cutting band (100) is driven by freely programmable servomotors.

12. A device according to any of the preceding claims, characterised in that a means is provided for cooling the cutting band (100) outside the cutting region.

13. A device according to any of the preceding claims, characterised in that a heater is provided for the cutting band (100).

14. A device according to any of the preceding claims, characterised in that a lubricating means is provided for depositing a film of oil or water on the cutting band (100).

15. A device according to any of the preceding claims, characterised in that a means for continuously sharpening the cutting band (100) is provided outside the cutting band.

## Revendications

1. Dispositif destiné à la mise à longueur de matière friable en bande, par exemple des bandes de pâtisserie ou analogues, qui est amenée au dispositif, comportant un ruban de découpe (100) pouvant être cycliquement relevé et abaissé dont la longueur est supérieure à une zone de découpe et qui peut être déplacé transversalement à la direction du transport de la matière en bande, caractérisé en ce que le ruban de découpe (100) agit conjointement avec un couteau (30) en tant que couteau antagoniste qui, par rapport à la direction de transport de la matière en bande, est disposé dans un plan qui est situé perpendiculairement à cette direction et qui définit la zone de découpe, et en ce qu'il englobe un mécanisme d'entraînement indexable (80, 82) pour le ruban de découpe (100).

2. Dispositif selon la revendication 1, caractérisé en ce que le ruban de découpe (100) est prévu au-dessus de la matière en bande.

3. Dispositif selon l'une des revendications 1 ou 2, caractérisé en ce que le mécanisme d'entraînement indexable (80, 82) est au moins programmable pour un pas de progression variable de l'avance du ruban de découpe (100) dans la direction z.

4. Dispositif selon l'une des revendications 1 à 3, caractérisé en ce qu'en dehors de la zone de découpe, le ruban de découpe (100) est vrillé d'environ 45° de part et d'autre de cette dernière.

5. Dispositif selon l'une des revendications 1 à 4, caractérisé en ce que le couteau (30) peut être relevé et abaissé de façon synchrone avec le mouvement de relèvement et d'abaissement du ruban de découpe (100).

6. Dispositif selon l'une des revendications 1 à 5, caractérisé en ce qu'il est prévu une inversion d'entraînement pour le ruban de découpe (100).

7. Dispositif selon l'une des revendications 1 à 6, caractérisé en ce que le ruban de découpe (100), qui n'est pas sans fin, est inséré dans des cassettes (50, 60) servant de contenant de réserve.

8. Dispositif selon l'une des revendications 1 à 7, caractérisé en ce qu'un dispositif de nettoyage (70) pour le ruban de découpe (100) est prévu entre la zone de découpe et au moins l'une des cassettes (50, 60).

9. Dispositif selon la revendication 8, caractérisé en ce que le dispositif de nettoyage (70) est constitué de deux blocs racleurs situés l'un en face de l'autre, entre lesquels se trouve le ruban de découpe (100).

10. Dispositif selon l'une quelconque des revendications précèdentes, caractérisé en ce que le couteau (30) est remplacé par un ruban de découpe.

11. Dispositif selon l'une quelconque des revendications précédentes, caractérisé en ce que le ruban de découpe (100) est entraîné par des servomoteurs librement programmables.

12. Dispositif selon l'une quelconque des revendications précédentes, caractérisé en ce qu'un dispositif de refroidissement est prévu en dehors de la zone de découpe pour le ruban de découpe (100).

13. Dispositif selon l'une quelconque des revendications précédentes, caractérisé en ce qu'il est prévu un chauffage pour le ruban de découpe (100).

14. Dispositif selon l'une quelconque des revendications précédentes, caractérisé en ce qu'il est prévu un dispositif de lubrification destiné à déposer un film d'huile ou d'eau sur le ruban de découpe (100).

15. Dispositif selon l'une quelconque des revendications précédentes, caractérisé en ce qu'un dispositif destiné à affûter en continu le ruban de découpe (100) est prévu en dehors du ruban de découpe.
